# FASCICULE DE BREVET EUROPEEN

(11) **EP 3 201 019 B1**
(45) Date de publication et mention de la délivrance du brevet: **20.11.2019**
(21) Numéro de dépôt: 15771625.9
(22) Date de dépôt: 01.10.2015
(51) Int. Cl.: B60J 7/10

(54) **CAPOTE AMOVIBLE POUR VÉHICULE DÉCOUVRABLE**
ABNEHMBARES VERDECK FÜR EIN CABRIOLET
REMOVABLE CONVERTIBLE TOP FOR CONVERTIBLE VEHICLE

(30) Priorité: 03.10.2014 FR 1459512
(43) Date de publication de la demande: 09.08.2017
(73) Titulaire: Bluecar, 92800 Puteaux (FR)
(72) Inventeur: HUREL, Benoît, F-78960 Voisins le Bretonneux (FR)
(74) Mandataire: Regimbeau
(86) Numéro de dépôt international: PCT/EP2015/072738
(87) Numéro de publication internationale: WO 2016/050935

(56) Documents cités:
- EP-A1- 2 364 869
- US-A- 3 476 437

## Description

La présente invention concerne le domaine des capotes amovibles pour véhicule, notamment mais non exclusivement de type cabriolet ou véhicule dit de plage.

De nombreux dispositifs formant capotes amovibles ont déjà été proposés.

On connait par exemple en France une capote enroulable d'avant vers l'arrière pour des anciens véhicules types 2 CV de Citroën.

On connait également une capote pliable en accordéon le long de deux rails parallèles sur les côtés longitudinaux du toit du véhicule, la capote se pliant de l'avant vers l'arrière en plis transversaux pour les véhicules de types Citroën C3.

Il existe par ailleurs de nombreux brevets décrivant des solutions de capotes amovibles pour véhicules découvrables. On citera à titre d'exemple non limitatif le document FR 2934207. Ce document décrit un toit souple avec baleine en matériau contenant des fibres piézoélectriques. Les extrémités des baleines sont crochetées sur la structure du véhicule pour leur maintien.

On citera également le document EP 1112881 qui décrit un système de fixation d'un toit pliant par crochetage.

D'autres dispositifs de capotes pour véhicules sont présentés dans les documents EP 2364869 et US 3476437.Les diverses solutions jusqu'ici proposées ne donnent cependant pas toujours totalement satisfaction.

Il arrive en particulier que, dans de nombreux cas, la capote en place dépasse au-dessus du pavillon du véhicule engendrant des remous et gênant la pose éventuelle de barres de toit ou d'une galerie. Les capotes connues peuvent flotter lors du roulage du véhicule entrainant des claquements bruyants et empêchant l'étanchéité du véhicule à la pluie.

On notera également que le mécanisme décrit dans le document EP 112881 précité est complexe et couteux.

Dans ce contexte, la présente invention a pour but de présenter de nouveaux moyens qui permettent d'améliorer la situation par rapport à la technique antérieure.

Ce but est atteint selon l'invention grâce à une capote amovible pour véhicule découvrable du type défini en revendication 1 annexée.

L'homme de l'art comprendra que la structure de l'invention, notamment le fait de prévoir les moyens d'accrochage non pas sur les extrémités des renforts longitudinaux, comme préconisé dans le document FR 2934207, mais sur des côtés opposés de la capote parallèles aux renforts longitudinaux, permet grâce à l'élasticité de la portion de toile située entre les deux ensembles d'accrochage placés sur les côtés opposés, d'assurer automatiquement la tension de la toile simultanément à l'opération d'accrochage de la toile et ainsi d'éviter tout flottement lors du roulage.

D'autres caractéristiques, buts et avantages de l'invention apparaitront à la lecture de la description détaillée qui va suivre, et en regard des dessins annexés, donnés à titre d'exemples non limitatifs, et sur lesquels :
- la figure 1 représente une vue schématique en perspective de dessus d'une capote amovible conforme à un mode de réalisation préférentiel de la présente invention,
- la figure 2 représente une vue similaire en bout de la même capote en place sur une structure de véhicule,
- la figure 3 représente une vue similaire à la figure 2, juste avant la mise en tension de la toile,
- la figure 4 représente une vue agrandie d'un bord de la capote, illustrant la coopération entre les crochets pour la mise en tension,
- la figure 5 illustre schématiquement la coopération existante entre les extrémités des renforts longitudinaux de la capote amovible et un arceau de véhicule,
- la figure 6 représente une vue d'une capote amovible conforme à la présente invention, partiellement enroulée en place sur un véhicule,
- la figure 7 une vue de détail de moyens d'accrochage et d'étanchéité conformes à l'invention,
- la figure 8 représente une vue de détail de moyens de fixation complémentaire de la capote amovible,
- la figure 9 représente une autre vue de détail d'un autre moyen de fixation complémentaire de la capote amovible,
- la figure 10 représente une vue de détail d'autres moyens de fixation complémentaire de la capote amovible conformes à la présente invention,
- la figure 11 illustre un autre moyen de fixation par bouton Tenax (marque déposée) de la capote sur les arceaux du véhicule,
- la figure 12 illustre un mode particulier de fixation avec lanières sous toile de la capote, réparties tout le long de l'arceau,
- les figures 13 et 14 représentent une vue d'un véhicule conforme à un mode de réalisation particulier de l'invention comprenant deux capotes amovibles,
- la figure 15 représente une vue en bout d'une capote conforme à un mode de réalisation particulier de l'invention comprenant un rabat latéral transparent assurant la protection de passagers,
- la figure 16 représente une vue latérale d'une telle variante de réalisation.

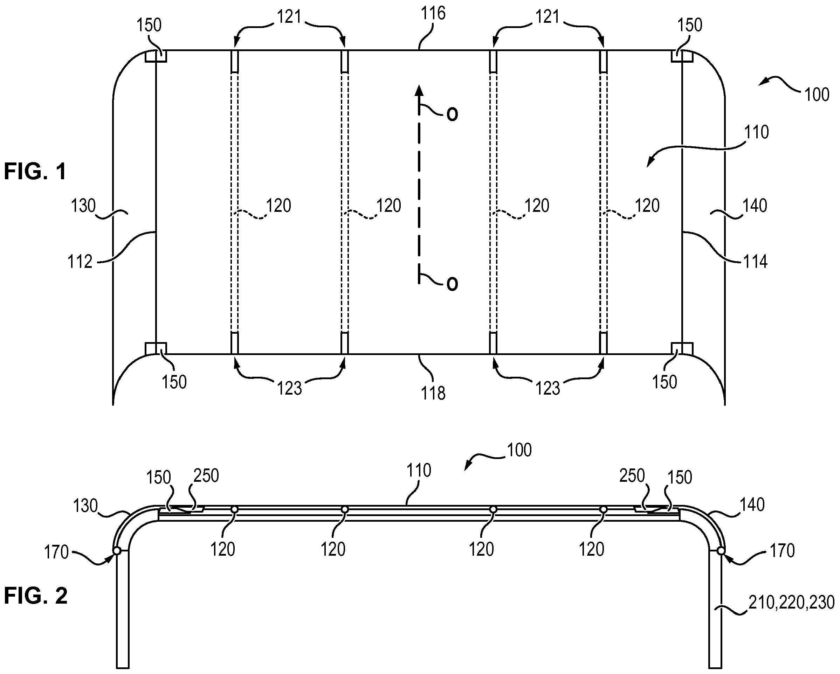

On a représenté sur les figures 1 à 12 annexées des exemples de réalisation d'une capote amovible de véhicule conforme à la présente invention sous la référence générale 100.

Cette capote comprend une toile 110 souple, étanche à l'air et au liquide. Le contour de la toile 110 est adapté à la géométrie du véhicule concerné. La toile est ainsi de contour général rectangulaire comprenant deux bords latéraux 112, 114 parallèles entre eux et parallèles à la direction longitudinale O-O du véhicule et deux bords transversaux respectivement avant 116 et arrière 118 parallèles entre eux.

La toile 110 peut être ainsi formée par exemple et non limitativement d'une feuille en matière thermoplastique ou d'une toile plastifiée ou d'une toile tissée, etc...

La capote 100 est munie d'une pluralité de renforts longitudinaux parallèles 120. Selon le mode de réalisation particulier non limitatif représenté sur les figures, il est ainsi prévu quatre renforts 120 parallèles entre eux et parallèles à l'axe O-O.

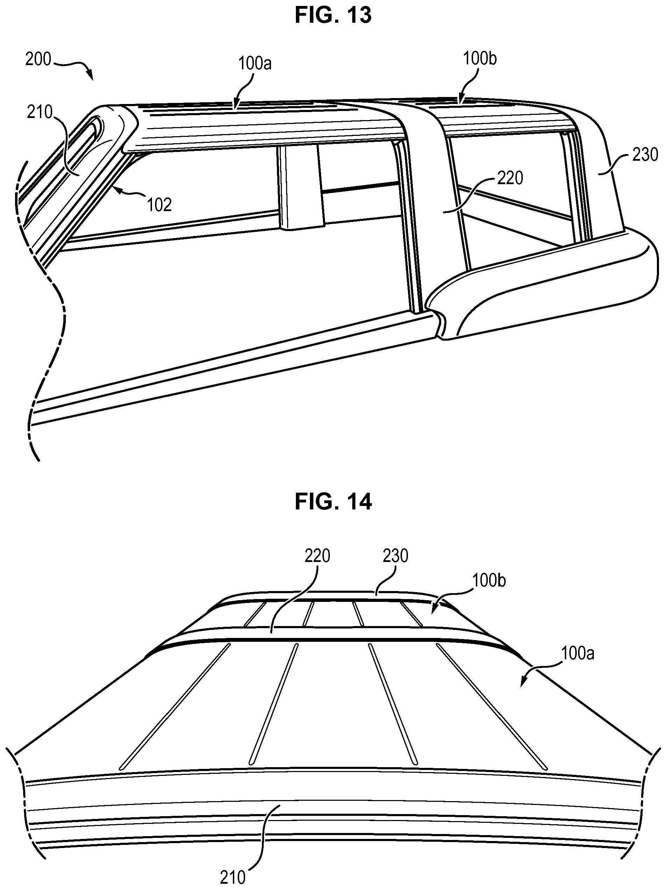

Chaque renfort longitudinal 120 s'étend sur toute la longueur de la toile 110 de sorte que les extrémités 121, 123 des renforts 120 soient situées au niveau des bords transversaux avant 116 et arrière 118. Les extrémités avant 121 et arrière 123 des renforts longitudinaux 120 sont adaptées pour reposer sur le bord des arceaux supérieurs. Ces arceaux supérieurs s'étendent chacun transversalement à la direction longitudinale du véhicule. Sur la figure 13, sur laquelle on a esquissé un véhicule 200, de tels arceaux sont par exemple représentés sous les références 210, 220 et 230, le véhicule en question étant adapté pour recevoir deux capotes amovibles comme on le précisera par la suite.

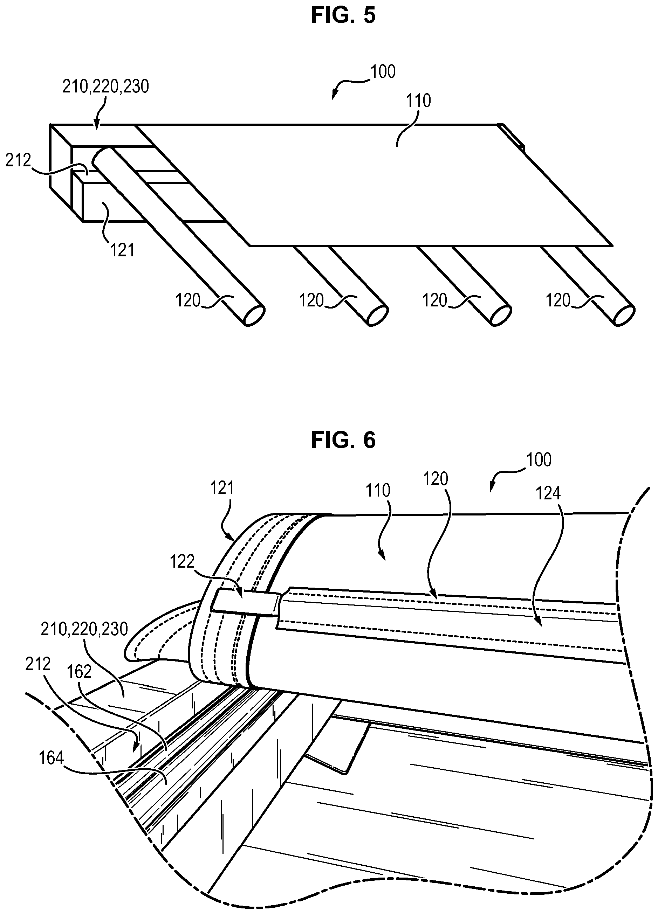

Plus précisément encore, comme on le voit sur le figure 5, de préférence, selon l'invention, chacun des arceaux de support 210, 220, 230 comporte un décrochement 212 dont la hauteur est au moins égale à l'épaisseur locale de l'extrémité associée des renforts longitudinaux 120, de sorte que les extrémités 121, 123 des renforts longitudinaux 120 et la toile 110 associée, soit la totalité de l'épaisseur de la capote 100, ne dépasse pas en épaisseur, afin de former sensiblement un pavillon de véhicule de forme sensiblement plane (figures 2, 13 et 14).

À cet effet, les extrémités 121, 123 des renforts longitudinaux 120 peuvent être aplaties comme cela est illustré sur la figure 6, sous la référence 122.

Les renforts longitudinaux 120 peuvent être formés en tout matériau rigide approprié. Il peut s'agir de jonc torique en métal ou en matériau composite. Ces renforts longitudinaux 120 sont reliés à la toile 110 par tout moyen approprié, par exemple par couture ou en étant emprisonnés dans des canaux longitudinaux formés par collage ou couture d'une bande longitudinale 124 rapportée sous la toile 110, comme illustré sur la figure 6.

Les renforts longitudinaux 120 et les moyens de liaison associés sont de préférence placés sous la face inférieure de la toile 110.

Comme on le voit sur la figure 6, la couture ou bande 124 formant support des renforts longitudinaux 120 est limitée en longueur, de sorte que chaque renfort 120, et à chaque extrémité, sa partie aplatie 122 émerge pour reposer sur le décrochement 212 précité.

La toile 110, et par conséquent la capote 100, sont préformées selon la forme du pare-brise avant et des montants du véhicule sur lesquels elles sont destinées à être installées. Comme illustré par exemple sur la figure 13, la capote 100 est notamment adaptée en géométrie à la partie avant en biais, référencée 102 sur la figure 13, du montant de pare-brise, correspondant à l'arceau 210 sur la figure 13.

En exemple représenté sur les figures 13 et 14, le véhicule comprend un arceau 210 entourant le pare-brise, un arceau arrière 230 délimitant l'arrière de la structure supérieure du véhicule, par exemple entourant la vitre arrière ou un hayon arrière lorsqu'il en existe, et un arceau intermédiaire 220.

En conséquence, dans l'exemple représenté sur les figures 13 et 14, le véhicule comporte deux capotes distinctes : une capote avant 100a placée entre le montant de pare-brise 210 et l'arceau central 220 et une capote arrière 100b placée entre l'arceau central 220 et l'arceau arrière 230.

Bien entendu, l'invention s'applique également au véhicule ne comportant qu'une seule capote amovible 100.

La partie centrale de chaque capote 100 est formée de préférence d'une toile 110 étanche et souple. Chaque capote 100 comprend sur chaque côté droit et gauche, c'est-à-dire en prolongement latéralement vers l'extérieur des bords longitudinaux 112 et 114 de la portion centrale de la toile 110, un renfort galbé 130, 140 rigide. Ces renforts latéraux 130, 140 sont rigides, sensiblement minces et préformés selon la forme de l'arrondi des arceaux 210, 220 et 230 sur lesquels la capote 100 est destinée à être fixée. Les renforts latéraux 130 et 140 permettent d'une part de rigidifier la capote à la forme de l'arrondi de l'arceau et éviter des flottements de la capote lors du roulage du véhicule et d'autre part permettent une manipulation plus aisée de la capote 100, notamment pour la mise en tension caractéristique de la capote 100, comme décrit ci-après.

Comme on l'a indiqué précédemment, selon l'invention, la capote 100, plus particulièrement les renforts latéraux 130, 140 rigides, est en outre munie sur ces bords latéraux 112, 114 opposés, parallèles aux renforts longitudinaux 120, d'ensembles de crochets respectifs 150 adaptés pour coopérer avec des structures d'accrochage complémentaire 250 prévues sur le véhicule. Les crochets, ou taquets ou organes de crochetage ou organes de mise en tension 150, et les structures d'accrochage complémentaire 250 sont adaptés pour assurer automatiquement la tension de la toile 110 par mise en tension élastique de la portion de toile située entre les deux ensembles de crochets 150, lorsque ces deux ensembles de crochets 150 sont mis en prise avec les structures d'accrochage complémentaire 250 prévues sur le véhicule.

Comme représenté plus particulièrement sur les figures 1 à 4, les crochets 150 sont de préférence orientés perpendiculairement à la direction longitudinale du véhicule pour assurer la tension recherchée de la toile 110.

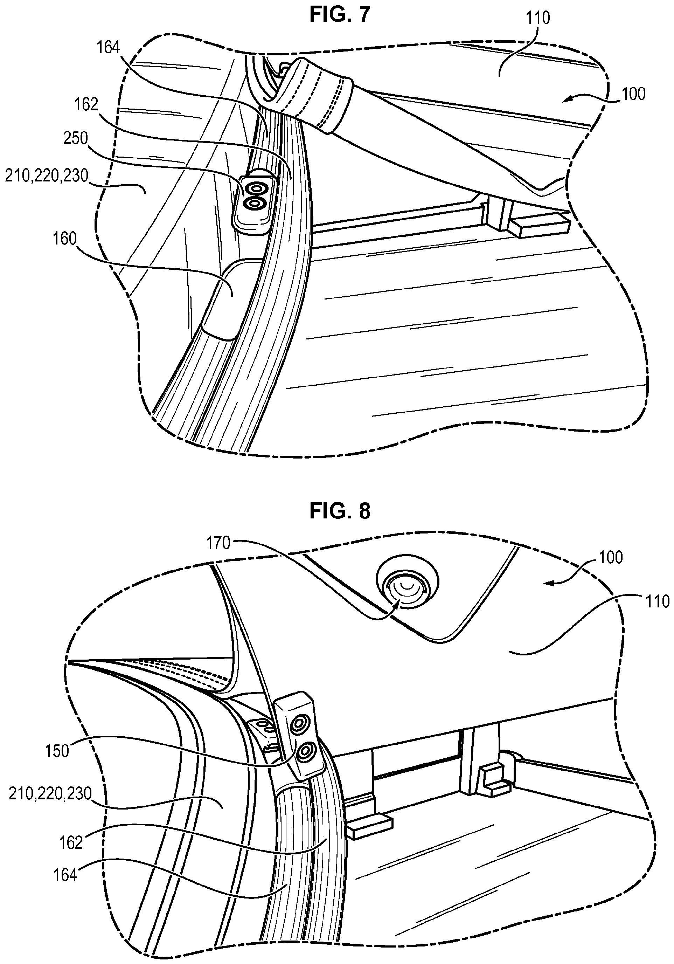

Il est prévu en particulier des structures d'accrochage 250 au niveau de chaque arceau 210, 220 et 230. Ainsi, chaque arceau 210, 220, 230 comporte en partie droite et en partie gauche, c'est-à-dire de part et d'autre de l'axe longitudinal O-O représenté sur la figure 1, deux crochets symétriques 250, ou taquets ou organes de crochetage ou de mise en tension complémentaires, de sorte que deux crochets symétriques 150 de la capote 100 viennent s'accrocher dans les crochets 250 de chaque arceau, comme illustré notamment sur les figures 2 et 8. Il est ainsi prévu, de préférence, des moyens d'accrochage 250 et 150 en partie avant de la capote 100 pour la fixation sur le montant correspondant 210 du pare-brise et en partie arrière de la capote 100 pour la fixation sur l'arceau central 220. En quelques sortes, les quatre crochets 150 sont ainsi positionnés aux quatre coins de la toile 110 pour assurer une mise en tension et un étirement optimal de la toile 110 entre deux arceaux successifs (figure 1).

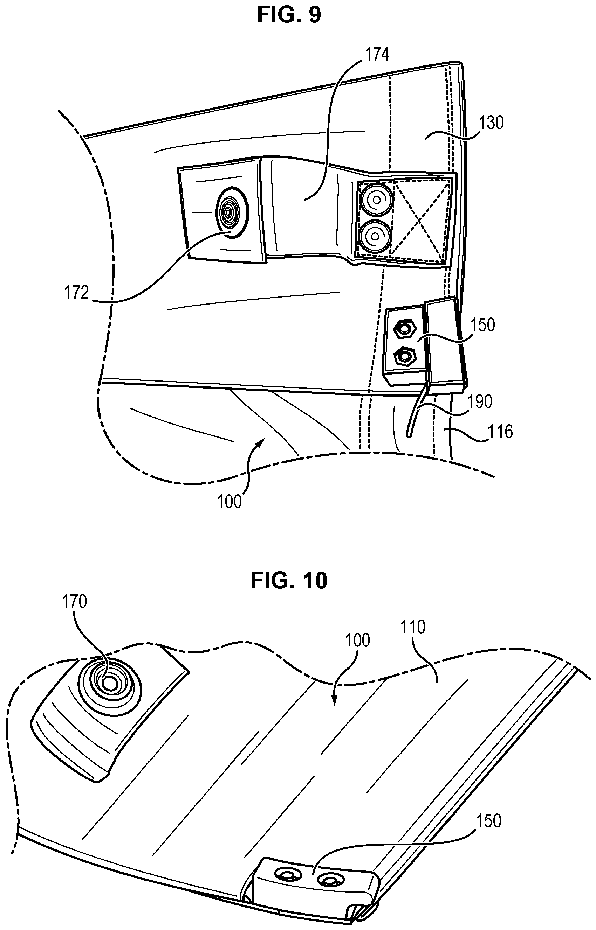

Selon une variante représentée sur la figure 9, la capote 100 peut être munie d'un fil métallique 190 (par exemple en acier) noyé dans la capote 100 qui s'étend sur toute la largeur de la toile 110 et relie deux taquets 150 d'un même côté 116 ou 118 de la toile (c'est-à-dire le long d'un bord transversal avant 116 ou arrière 118) (perpendiculaire à la direction longitudinale O-O), pour optimiser la tension et le plaquage sur les arceaux 210, 220, 230 et pour assurer l'étanchéité. Plus précisément, il est de préférence prévu un tel fil 190 respectivement sur chacun des bords transversaux 116 et 118.

Ainsi, l'encliquetage des crochets 150 et 250 assure la tension de la toile 110 de la capote 100 lorsque l'on déroule celle-ci et que l'on met la capote 100 en position sur les arceaux 210, 220 et 230, comme décrit ci-après.

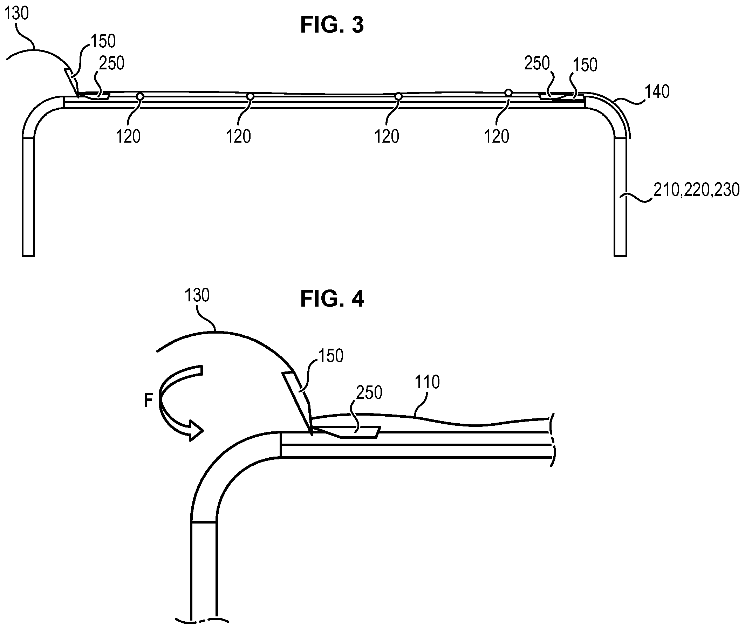

On a représenté sur la figure 3 une vue similaire à la figure 2, mais correspondant à la position de la capote 100 juste avant accrochage du deuxième renfort latéral rigide 130, pour illustrer le fait qu'avant le crochetage, la toile 110 n'est pas encore mise en tension (c'est-à-dire tendue complètement).

La figure 4 représente une vue agrandie partielle de la figure 3 pour illustrer la coopération entre les crochets 150 prévus sur la toile 110 et les crochets 250 prévus sur le véhicule 200. Plus précisément, la figure 4 illustre la notion de rotation vers le bas (illustrée par la flèche F) pour effectuer le crochetage/encliquetage.

Dans le cadre de l'invention, il est également prévu, de préférence, des moyens d'étanchéité 160 entre le bord de la toile 110, ou la capote 100, et la structure de support de la capote 100 formée sur le véhicule, en particuliers par les arceaux 210, 220 et 230.

Plus précisément, comme on l'a illustré sur la figure 7, les moyens d'étanchéité 160 comprennent de préférence un moyen d'étanchéité continu formé d'un bourrelet 162 en caoutchouc, ou tout matériau équivalent, souple interne, sur lequel vient reposer la bordure de la capote 100. Comme on le voit sur la figure 7, les moyens d'étanchéité 160 comprennent en outre, de préférence, un bourrelet extérieur 164 interrompu au droit de la jonction entre la partie souple 110 et les parties rigides 130, 140 au niveau de la localisation des moyens d'accrochage 250.

Une fois ainsi mise en place sur les arceaux 210, 220, 230 et tendue par la coopération entre la toile 110 et les renforts latéraux 130, 140, plus particulièrement entre les moyens d'accrochage 150, 250, la capote 100 est fixée à son extrémité, de préférence, par tout moyen approprié, par exemple par un bouton pression 170 coopérant avec la partie complémentaire du même bouton fixé en regard sur un arceau 210, 220 ou 230 correspondant (figure 8).

Bien entendu, des moyens de fixation peuvent être formés de tout autre moyen approprié, par exemple des dispositifs dénommés « sauterelle », à savoir des crochets à ressort et à levier pour plus de sécurité. De tels moyens de fixation de type sauterelle sont connus de l'homme de l'art et ne seront donc pas décrit dans le détail par la suite.

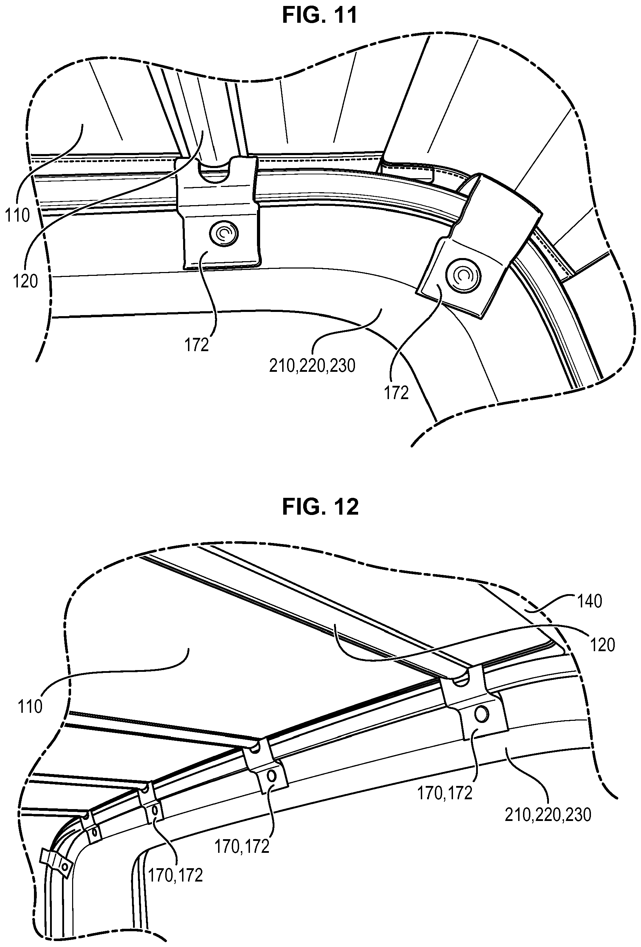

De même, les moyens de fixation peuvent être formés par des boutons 172 de type « tenax » (marque déposée), comme représenté sur la figure 11. De tels boutons de fixation ont pour avantages principaux d'être solides, peu coûteux, faciles d'utilisation et rapides à fixer et enlever lors de la manipulation de la capote.

Tout autre moyen de fixation équivalent peut bien entendu être utilisé en remplacement des sauterelles, des boutons pression 170 ou des boutons 172 de type « tenax » (marque déposée) sans sortir du cadre de la présente invention.

Avantageusement, la capote 100 est équipée d'une pluralité de moyens de fixation (figure 12) disposés de manière à être réparties sur toute la largeur de la capote 100, c'est-à-dire tout le long des arceaux sur lesquels la capote 100 est destinée à être positionnée, pour assurer un maintien étanche renforcé de la capote 100 sur les arceaux 210, 220 et 230. Dans un mode particulier de réalisation (figure 9), les moyens de fixation 172 sont agencés à l'extrémité de bandes ou lanières 174 faisant saillie de la surface inférieure de la toile 110, de sorte à permettre la fixation de la capote 100 en-dessous de la zone d'étanchéité entre la toile 110 et les arceaux 210, 220 et 230 (figure 12).

Plus précisément on a illustré sur la figure 12 quatre points de fixation 170 ou 172 répartis le long d'un arceau 210, 220 ou 230, sensiblement au niveau des renforts longitudinaux 120, à l'extrémité de bandes de tissu 174 associées pour se fixer sur l'arceau et sous le plan de joint.

On aperçoit par ailleurs sur les figures 9 et 12 un renfort latéral rigide 140 fixé grâce à une fixation 170 ou 172 selon le même principe que la toile 110.

La capote 100 conforme à la présente invention offre ainsi de nombreux avantages par rapport à l'état de la technique.

On peut notamment souligner les avantages suivants :
- Tout d'abord, l'invention est particulièrement simple à fabriquer et de faible coût ;
- Ensuite, l'invention est facile à installer par une seule personne en peu de temps, typiquement quelques minutes ;
- Par ailleurs, une fois retirée la capote peut être roulée, éventuellement rangée dans une housse associée, et comme elle tient peu de place, elle peut être rangée dans un coffre ou tout espace dédié du véhicule aisément.

Bien entendu, la présente invention n'est pas limitée au mode de réalisation particulier qui vient d'être décrit mais s'étend à toute variante conforme en son esprit.

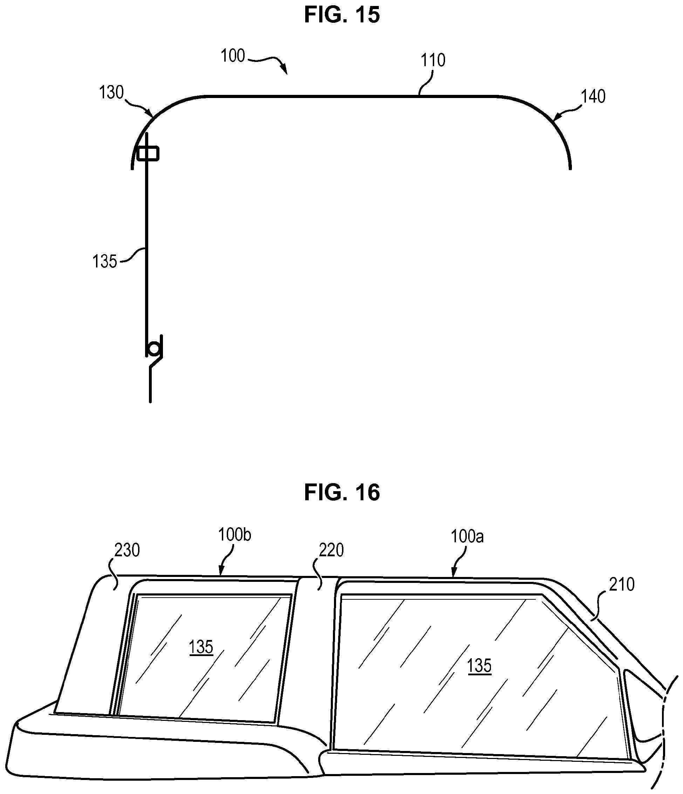

Comme on l'a illustré sur les figures 15 et 16, la capote 100 peut également comporter des rabats latéraux 135 transparents pour assurer une protection des passagers contre la pluie ou le vent de côté sur la partie supérieure des portières du véhicule.

De tels rabats 135 peuvent être formés de parois plastiques transparentes fixées à la base des parties rigides 130, 140 conformées de la capote 100 (figure 15).

Les rabats 135 peuvent être fixés par tout moyen approprié tant sur la structure de la capote 100 que sur la structure du véhicule, par exemple par des boutons pression, des fermetures à glissière ou tout autre moyen équivalent.

A titre d'exemple, chaque partie rigide 130, 140 de la capote 100 peut comporter une partie de fermeture à glissière et chaque rabat 135 peut comporter une partie complémentaire de la fermeture à glissière. Dans tous les cas, de préférence, un principe d'étanchéité est prévu entre les parties rigides 130, 140 de la capote et le moyen de fermeture associé aux rabats 135 au niveau de cette zone.

Les rabats 135 sont de préférence déplaçables entre une position déployée, illustrée sur la figure 15, dans laquelle les rabats 135 couvrent les flans latéraux du véhicule et une position repliée par enroulement vers la capote 100, les rabats 135 étant maintenus en position repliée enroulée par tout moyen approprié, par exemple par des bandes de fixation de type « velours crochet » (ou velcro (marque déposée)) ou tout moyen équivalent, par exemple des boutons pression.

De même, il est prévu, de préférence, des moyens de maintien des rabats 135 en position déployée, tel qu'illustré sur la figure 15, par exemple sous forme de boutons pression ou là encore de deux bandes de type « velours crochet » complémentaire, ou de tout moyen équivalent.

L'homme de l'art comprendra aisément le fonctionnement de la capote 100 conforme à l'invention à la lecture de la description qui précède.

Pour retirer la capote 100, on dégrafe les moyens de fixation 170 et/ou 172 fixant la capote 100 aux arceaux 210, 220, 230.

On enroule la capote 100 sur elle-même depuis un premier côté de la voiture, en prenant en main le renfort latéral 130 ou 140 correspondant de sorte que le jeu de crochets 150, 250 associés se désolidarise en effectuant une rotation/enroulement du renfort latéral de la capote vers le haut. Ce faisant les crochets 150, 250 se décrochent.

On continue à enrouler la capote 100 jusqu'à ce que les crochets 150, 250 de l'autre côté du véhicule se décrochent et on finit l'enroulement avant de ranger la capote 100 dans un coffre de rangement ou tout autre lieu approprié.

Pour mettre en place une capote 100, on procède comme suit. Dans un premier temps, on déroule la capote 100 depuis un premier côté en s'assurant que la partie rigide arrondie 130 ou 140 est en face de l'arrondi de l'arceau correspondant. Plus particulièrement, on positionne les premiers crochets 150 d'un premier renfort latéral 130 ou 140 dans les crochets 250 associés des arceaux correspondants (respectivement avant et arrière simultanément), puis on déroule la capote 100 jusqu'à positionner les crochets 150 du second renfort latéral 140 ou 130 sensiblement au niveau des crochets 250 associés des arceaux correspondants jusqu'au côté latéral opposé du véhicule.

Comme illustré sur la figure 4, on accroche alors par rotation/encliquetage vers le bas (flèche F) les crochets 150 et 250 complémentaires (respectivement avant et arrière simultanément) dudit côté opposé ce qui assure la mise en tension complète de la capote 100 sur les arceaux associés.

On fixe alors les moyens de fixation (boutons pression 170, boutons 172 de type « tenax » et/ou tout moyen équivalent) de chaque côté du véhicule et le long des arceaux, comme illustré par exemple sur la figure 12, ce qui assure le maintien de la capote 100 sur les arceaux correspondant et assure l'étanchéité.

Sur la figure 2, on a référencé 170 des moyens de fixation optionnels du bord latéral externe des parties rigides 130, 140 de la capote sur la structure de véhicule.

## Revendications

1. Capote (100) amovible pour véhicule découvrable, comportant :
- une toile étanche (110) souple
- des renforts latéraux galbés rigides (130, 140), agencés sur les côtés opposés de la toile (110), et munis d'ensembles de crochets respectifs (150) adaptés pour coopérer avec des structures d'accrochage (250) complémentaire prévues sur le véhicule, ladite toile (110) et lesdits renforts latéraux (130, 140) coopérant pour permettre d'assurer automatiquement la tension de la toile (110), par mise en tension élastique de la portion de toile (110) située entre les deux ensembles de crochets (150), lorsque ces deux ensembles de crochets (150) sont mis en prise avec les structures d'accrochage (250) prévues sur le véhicule, **caractérisée par le fait que** la toile étanche (110) est munie de renforts longitudinaux (120) dont les extrémités sont adaptées pour reposer sur des arceaux (210, 220, 230) d'un véhicule, les renforts latéraux étant parallèles aux renforts longitudinaux (120), et que la capote comporte des moyens (170, 172) de fixation sur la structure du véhicule de type à base de boutons pression agencés au niveau de bandes de tissus en saillie de la surface inférieure de la toile (110) de la capote (100).

2. Capote selon la revendication 1, **caractérisée par le fait que** les renforts longitudinaux (120) s'étendent parallèlement à la direction longitudinale du véhicule, tandis que les ensembles de crochets respectifs (150) sont prévus aux extrémités des bords latéraux (112, 114) de la toile (110) et sont orientés perpendiculairement à la direction longitudinale du véhicule.

3. Capote selon l'une des revendications 1 ou 2, **caractérisée par le fait que** les moyens (170, 172) de fixation sur la structure d'un véhicule, sont à base de boutons de type « tenax ».

4. Capote selon la revendication précédente, **caractérisée en ce que** les moyens (170, 172) de fixation sont répartis régulièrement le long de la capote (100) pour être fixés au niveau des arceaux (210, 220, 230) associés.

5. Véhicule **caractérisé par le fait qu'**il est équipé d'au moins une capote (100) conforme à l'une des revendications 1 à 4.

6. Véhicule selon la revendication 5, **caractérisé par le fait qu'**il est équipé de deux capotes (100) conforme chacune à l'une des revendications 1 à 5.

7. Véhicule selon la revendication 5 ou la revendication 6, **caractérisé par le fait que** les renforts longitudinaux (120) de chaque capote (100) sont formés de joncs dont les extrémités sont placées dans des décrochements (212) prévus sur le véhicule, les extrémités des joncs étant de préférence aplaties de sorte que chaque capote (100) ne dépasse pas en épaisseur par rapport à la structure du véhicule.

8. Véhicule selon l'une des revendications 5 à 7, **caractérisé par le fait qu'**il comporte des moyens d'étanchéité (160) entre la périphérie de chaque capote (100) et la structure du véhicule.

9. Véhicule selon la revendication 8, **caractérisé par le fait que** les moyens d'étanchéité (160) comprennent au moins un bourrelet, de préférence deux bourrelets (162, 164), l'un continu et l'autre interrompu, au niveau des structures d'accrochage (250).

## Patentansprüche

1. Abnehmbares Verdeck (100) für ein abdeckbares Fahrzeug, umfasst:
- eine wasserdichte Plane (110);
- steife, bombierte, laterale Vertiefungen (130, 140), die an den entgegengesetzten Seiten der Plane (110) angeordnet und mit jeweiligen Hakengruppen (150) versehen sind, die zum Zusammenwirken mit komplementären, auf dem Fahrzeug vorgesehenen Befestigungsstrukturen (250) geeignet sind, wobei die genannte Plane (110) und die genannten lateralen Verstärkungen (130, 140) zusammenwirken, um das automatische Gewährleisten der Spannung der Plane (110) durch elastisches Unter-Spannungsetzen des Planenabschnitts (110) zu erlauben, der zwischen den zwei Hakengruppen (150) angeordnet ist, wenn diese zwei Hakengruppen (150) in die auf dem Fahrzeug vorgesehenen Befestigungsstrukturen (205) zum Eingreifen kommen, **gekennzeichnet durch** die Tatsache, dass die wasserdichte Plane (110 mit länglichen Verstärkungen (120) versehen ist, deren Enden zum Ruhen auf den Bügeln (210, 220, 230) eines Fahrzeugs geeignet sind, wobei die lateralen Verstärkungen parallel zu den länglichen Verstärkungen (120) sind und das Verdeck Befestigungsmittel (170, 172) auf der Struktur des Fahrzeugs vom Typ auf Druckknopfbasis umfasst, die an Stoffbändern angeordnet sind, die von der unteren Oberfläche der Plane (110) des Verdecks (100) hervorstehen.

2. Verdeck gemäß Anspruch 1, **gekennzeichnet durch** die Tatsache, dass die länglichen Verstärkungen (120) sich parallel zur Längsrichtung des Fahrzeugs erstrecken, während die jeweiligen Hakengruppen (150) an den Enden der lateralen Ränder (112, 114) der Plane (110) vorgesehen sind und lotrecht zur Längsrichtung des Fahrzeugs ausgerichtet sind.

3. Verdeck gemäß einem der Ansprüche 1 oder 2, **gekennzeichnet durch** die Tatsache, dass die Befestigungsmittel (170, 172) auf der Struktur eines Fahrzeugs auf Knöpfen vom Typ "Tenax" basieren.

4. Verdeck gemäß dem voranstehenden Anspruch, **dadurch gekennzeichnet, dass** die Befestigungsmittel (170, 172) regelmäßig entlang des Verdecks (100) verteilt sind, um an den zugeordneten Bügeln (210, 220, 230) befestigt zu sein.

5. Fahrzeug, **gekennzeichnet durch** die Tatsache, dass es mit wenigstens einem Verdeck (100) gemäß einem der Ansprüche 1 bis 4 ausgerüstet ist.

6. Fahrzeug gemäß Anspruch 5, **gekennzeichnet durch** die Tatsache, dass es mit zwei Verdecks (100) ausgerüstet ist, das jeweils einem der Ansprüche 1 bis 5 entspricht.

7. Fahrzeug gemäß Anspruch 5 oder Anspruch 6, **gekennzeichnet durch** die Tatsache, dass die länglichen Verstärkungen (120) jedes Verdecks (100) aus Stäben gebildet sind, deren Enden in Abweichungen (212) platziert sind, die auf dem Fahrzeug vorgesehen sind, wobei die Enden der Stäbe bevorzugt derart abgeflacht sind, dass jedes Verdeck (100) in der Dicke im Verhältnis zur Struktur des Fahrzeugs nicht hervorsteht.

8. Fahrzeug gemäß irgendeinem der Ansprüche 5 bis 7, **gekennzeichnet durch** die Tatsache, dass es Abdichtmittel (160) zwischen der Peripherie jedes Verdecks (100) und der Struktur des Fahrzeugs umfasst.

9. Fahrzeug gemäß Anspruch 8, **gekennzeichnet durch** die Tatsache, dass die Abdichtmittel (160) wenigstens einen Wulst, bevorzugt zwei Wulste (162, 164), einen kontinuierlichen und einen unterbrochenen, an den Befestigungsstrukturen (250) umfassen.

## Claims

1. A removable top (100) for a convertible vehicle, including:
- a flexible impervious fabric (110)
- rigid curved side reinforcements (130, 140), arranged on the opposite sides of the fabric (110), and provided with respective sets of hooks (150) adapted to cooperate with complementary hooking structures (250) provided on the vehicle, said fabric (110) and said side reinforcements (130, 140) cooperating to enable tension of the fabric (110) to be automatically ensured, by elastically tensioning the portion of fabric (110) located between the two sets of hooks (150), when these two sets of hooks (150) are engaged with the hooking structures (250) provided on the vehicle, **characterised in that** the impervious fabric (110) is provided with longitudinal reinforcements (120) the ends of which are adapted to rest on roll bars (210, 220, 230) of a vehicle, the side reinforcements being parallel to the longitudinal reinforcements (120), and **in that** the top includes attachment means (170, 172) for attachment to the structure of the vehicle of the snap-fastener based type arranged at fabric webs projecting from the lower surface of the fabric (110) of the top (100).

2. The top according to claim 1, **characterised in that** the longitudinal reinforcements (120) extend parallel to the longitudinal direction of the vehicle, whereas the respective sets of hooks (150) are provided at the ends of the side edges (112, 114) of the fabric (110) and are oriented perpendicular to the longitudinal direction of the vehicle.

3. The top according to one of claims 1 and 2, **characterised in that** the attachment means (170, 172) for attachment to the structure of a vehicle, are of the "tenax" type fasteners.

4. The top according to the preceding claim, **characterised in that** the attachment means (170, 172) are evenly distributed along the top (100) to be attached at associated roll bars (210, 220, 230).

5. A vehicle **characterised in that** it is equipped with at least one top (100) in accordance with one of claims 1 to 4.

6. The vehicle according to claim 5, **characterised in that** it is equipped with two tops (100) each in accordance with one of claims 1 to 5.

7. The vehicle according to claim 5 or claim 6, **characterised in that** the longitudinal reinforcements (120) of each top (100) are formed by cords the ends of which are placed in steps (212) provided on the vehicle, the ends of the cords being preferably flattened such that each top (100) does not project in thickness with respect to the structure of the vehicle.

8. The vehicle according to one of claims 5 to 7, **characterised in that** it includes sealing means (160) between the periphery of each top (100) and the structure of the vehicle.

9. The vehicle according to claim 8, **characterised in that** the sealing means (160) include at least one ripple, preferably two ripples (162, 164), one continuous and the other discontinuous, at the hooking structures (250).
